Europäisches Patentamt

European Patent Office

Office européen des brevets

(11) Publication number: **0 421 484 A1**

## EUROPEAN PATENT APPLICATION

(21) Application number: 90120675.5

(51) Int. Cl.⁵: **C10G 11/18, B01J 8/38**

(22) Date of filing: 02.07.85

This application was filed on 29 - 10 - 1990 as a divisional application to the application mentioned under INID code 60.

(30) Priority: 18.07.84 US 632086
18.07.84 US 632084
18.07.84 US 632085

(43) Date of publication of application:
**10.04.91 Bulletin 91/15**

(60) Publication number of the earlier application in accordance with Art.76 EPC: **0 169 008**

(84) Designated Contracting States:
**BE DE FR GB IT NL**

(71) Applicant: **MOBIL OIL CORPORATION**
**3225 Gallows Road**
**Fairfax, Virginia 22037(US)**

(72) Inventor: **Haddad, James Henry**
**45 Van Wyck Drive**
**Princeton Junction, New Jersey 08550(US)**
Inventor: **Owen, Hartley**
**5 Riverview Court**
**Belle Mead, New Jersey 08502(US)**

(74) Representative: **Curtis, Philip Anthony (GB)**
**Patent Department, Mobil Court 3 Clements Inn**
**London WC2A 2EB(GB)**

(54) FCC catalyst stripping method and apparatus.

(57) A method and apparatus for improving the stripping of hydrocarbons from catalyst particles in a fluidized catalytic cracking (FCC) unit. A stripper vessel is located directly adjacent the exhaust barrel of a separator and immediately begins stripping hydrocarbon from catalyst particles. The stripper is sealed at the catalyst exit by a catalyst seal pot, with the drain sized to permit only a portion of catalyst flow to pass therethrough, with the remainder catalyst overflowing the seal pot. A short contact time stripper and catalyst particle deflector reduce the "residence" time of hydrocarbons with catalyst particles.

EP 0 421 484 A1

## FCC CATALYST STRIPPING METHOD AND APPARATUS

The present invention relates to methods and apparatus for the separation of a catalyst and hydrocarbon materials in a fluidized catalytic cracking (FCC) unit.

Fluid catalytic cracking, has undergone significant development improvements due to advances in catalyst technology. With the advent of zeolite cracking catalysts, new areas of operating technology have been encountered, requiring refinements in processing techniques to take advantage of the high catalyst activity, selectivity and operating sensitivity.

The catalyst usually employed in an FCC installation is preferably a high activity crystalline zeolite catalyst of a fluidizable particle size. The catalyst is transferred in suspended or dispersed phase condition with a hydrocarbon feed generally upwardly through one or more riser reactors (FCC cracking zones), providing a hydrocarbon residence time of 0.5 to 10 seconds, and usually less than 8 seconds. High temperature riser cracking, occurring at temperatures of at least 538° C (1000° F) or higher and at 0.5 to 4 seconds hydrocarbon residence time in contact with the catalyst in the riser, is desirable.

Rapid separation of catalyst from cracked hydrocarbons discharged from the riser reactor is desirable. During cracking, carbonaceous deposits or coke accumulate on the catalyst particles and the particles entrain hydrocarbon vapors upon removal from the riser reactor. The entrained hydrocarbons are removed from the catalyst by a separator, which could be a mechanical means, and/or stripping gas in a separate catalyst stripping zone. Hydrocarbon conversion products separated and materials stripped from the catalyst are combined and passed to product fractionation. Stripped catalyst containing coke, is then passed to a catalyst regenerator.

Cyclones are typically used for efficient separation of catalyst particles from the gas phase. Cyclones often permit an undesirable extended residence time of the product vapor within a large reactor vessel. This extended residence time reduces the desired product yield by as much as 4% through non-selective cracking. Recent developments in this art have been concerned with the rapid separation of catalyst from cracked products.

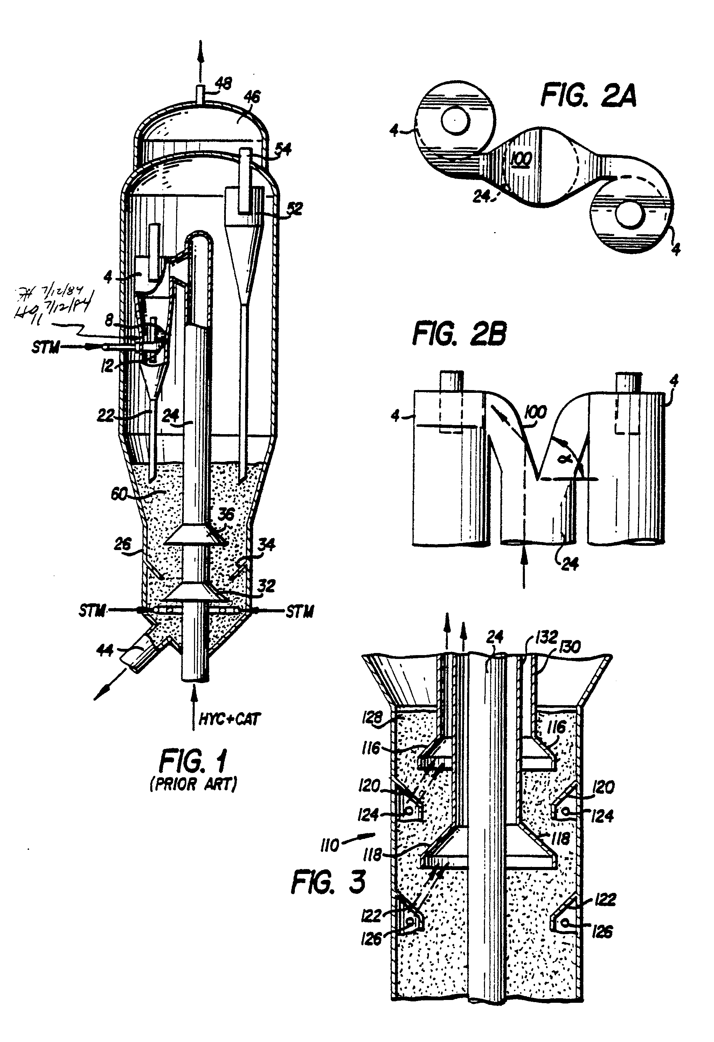

Fig. 1 in the present application corresponds to a simplified illustration of Fig. 2 from Anderson et al, U. S. Patent No. 4,043,899, where similar reference numbers have been utilized to illustrate similar structures in the two figures. Anderson et al discloses a method for rapid separation of a product suspension, comprising the cracked product phase and catalyst (entering riser reactor 24), by discharging the entire suspension directly from the riser into a cyclone separator 4. The cyclone is modified to include a separate cyclonic stripping of the catalyst separated from the hydrocarbons vapors in an auxiliary stripper. The cyclone separator is modified to include an additional downwardly extending section comprising a lower cyclone stage 11. Catalyst separated in the upper stage of the cyclone slides along a downwardly sloping helical baffle 12 to the lower cyclone, where stripping steam is introduced to further separate entrained hydrocarbon products from the catalyst recovered from the upper cyclone. The steam and stripped hydrocarbons are passed from the lower cyclone through a concentric pipe 8, where they are combined with the hydrocarbon vapors separated in the upper cyclone.

The separated, stripped catalyst is collected and passes from the cyclone separator 4 by conventional means through a dipleg 22 into a catalyst bed 60 in the bottom of reactor vessel 26 and out catalyst exit 44. This lower portion of vessel 26 also acts as a catalyst stripping section, comprising baffles 32, 34, and 36, with steam being supplied to the catalyst bed thereunder. Vaporous material separated in cyclone 4 can also be discharged into cyclone 52 and subsequently passed by way of conduit 54 into chamber 46 and withdrawn therefrom by conduit 48 for eventual fractionation.

A substantial amount of catalyst stripping occurs in catalyst bed 60. The stripped hydrocarbon material still contacts with additional catalyst particles as it is carried upward through the catalyst bed and into the entrance of cyclone 52 and from there to chamber 46 and eventual fractionation. This increased hydrocarbon material/catalyst contact contributes to uncontrolled and undesired cracking of the hydrocarbon materials.

At each stripper, in Fig. 1, stage, represented by baffles 32, 34 and 36, the hydrocarbons stripped from catalyst in the lower portion of vessel 26 undego further catalyst contact while making their way to the surface of the catalyst bed. The catalyst bed acts as a lower seal to the dipleg 22, to prevent the flow of hydrocarbon-laden gas through dipleg 22 into the catalyst bed. The dipleg must be extended deep within the catalyst bed in order to provide a sufficient seal. This depth requirement, plus the desirability of multistage stripping (to ensure that a high percentage of hydrocarbon material is removed from the catalyst) requires a substantial volume of catalyst in bed 60, which increases the uncontrolled contact of hydrocarbons with catalyst.

There is still a need to reduce total contact time between hydrocarbon materials and catalysts to reduce, to the extent possible, non-selective cracking.

Accordingly, the present invention provides a fluidized catalytic cracking process wherein a hydrocarbon feed contacts a conventional FCC catalyst in a riser reactor to produce a riser effluent comprising spent FCC catalyst with entrained cracked hydrocarbons and a vapor phase cracked hydrocarbon stream characterized by separating in a separator the riser effluent into a gaseous effluent and separated catalyst, immediately and non-cyclonically stripping, within a stripper, entrained and absorbed hydrocarbons from catalyst particles in the separated catalyst as the catalyst particles exit the separator, and passing the stripped hydrocarbons to a stripper exit.

In another embodiment, the present invention provides an improved method of sealing the catalyst exit of a catalyst stripper comprising the steps of passing the stripped catalyst seal pot comprising at least one drain sized to permit between 10 and 90% of stripped catalyst to flow through the drain.

In another embodiment, the present invention provides a fluidized catalyst cracking process wherein a hydrocarbon feed contacts a conventional FCC catalyst in a riser reactor to produce a riser effluent comprising spent FCC catalyst with entrained cracked hydrocarbons and a vapor phase cracked hydrocarbon stream characterized by separating in a separator the riser effluent into a gaseous effluent and separated catalyst, passing separated catalyst through a stripper vessel having an entrance, a catalyst exit and a stripped hydrocarbon exit, causing separated catalyst to follow a circuitous path from the entrance through the stripper vessel to the catalyst exit, injecting a stripping gas so that it contacts with only a portion of the separated catalyst that is above the stripping gas injecting location and located between the location and stripped hydrocarbon exit, and passing stripper gas and hydrocarbons stripped from separated catalyst directly to the stripped hydrocarbon exit.

In another embodiment, the present invention provides a method of fluid catalytic cracking of a hydrocarbon feed comprising the steps of passing a mixture, as a suspension, of the hydrocarbon feed and a catalyst through a riser conversion zone contained within a reactor vessel and cracking the hydrocarbon feed in the riser conversion zone, passing the mixture through a deflection zone in which the mixture is physically deflected from an exit of the riser conversion zone towards an exit of the deflection zone, and passing the deflected mixture from the deflection zone exit to a separation zone.

In related embodiments, the present invention provides apparatus to accomplish the above processes.

Fig. 1 is a diagrammatic sketch of the riser reactor, including catalyst stripping zone, illustrated in Fig. 2 of U.S. Patent No. 3,043,899 to Anderson et al;

Fig. 2a is a top view of a riser conversion zone illustrating the connection to two cyclone separators;

Fig. 2b is a side view of the subject matter in Fig. 2a;

Fig. 3 is a side view partially in section of one embodiment of a short contact time catalyst stripper;

Fig. 4 is a side view partially in section of a further embodiment of a short contact time catalyst stripper;

Fig. 5 is a side view partially in section of a four-stage countercurrent stripper which can be directly connected with the exhaust barrel of the cyclone separator illustrated in Figs. 2a and 2b;

Fig. 6 is a side view partially in section of one embodiment of a catalyst seal pot;

Fig. 7 is a side view partially in section of a further embodiment of a catalyst seal pot;

Fig. 8 is a side view partially in section of a short contact time catalyst stripper located adjacent the exhaust barrel of a cyclone separator;

Fig. 9 is a side view partially in section of a modified cyclone separator exhaust barrel and its interconnection with a short contact time stripper;

Fig. 10 is a side view partially in section in which baffles deflect catalyst particles into the inlet of a cyclone separator adjacent a two-stage short contact time stripper whose lower end is sealed by a catalyst seal pot.

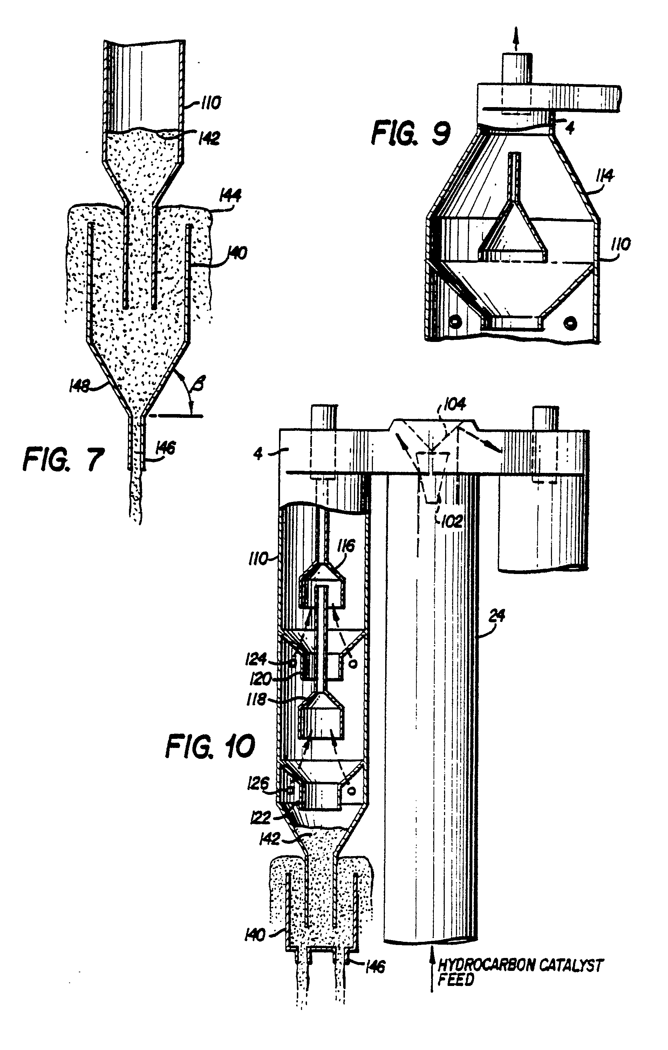

The present invention is directed to a catalyst particle deflector which reduces uncontrolled cracking, as illustrated in Figs. 2a, 2b and 10.

Because each of these methods and apparatus can be utilized separately or in various combinations, a discussion of each and their interaction follows.

The present invention is also directed to a stripper as a method and apparatus for reducing uncontrolled cracking, and various embodiments are shown in Figs. 3, 4 and 8-10.

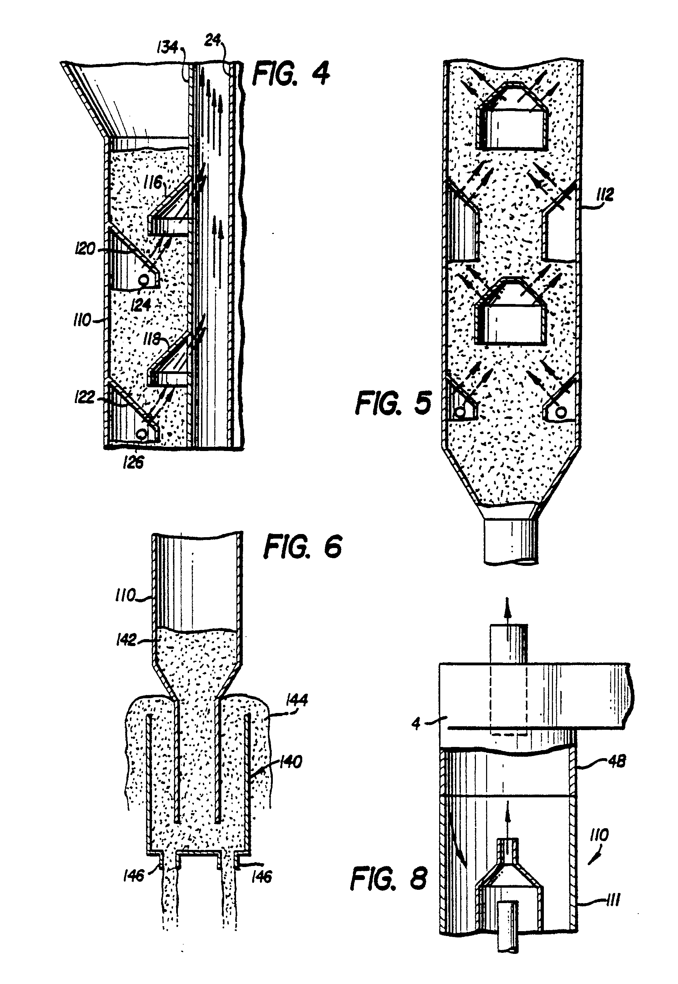

The present invention is also directed to a method and apparatus for reducing uncontrolled cracking by utilizing a catalyst seal pot, which is illustrated in Figs. 6, 7 and 10.

In the drawings like numerals represent like elements throughout the several views.

In Fig. 8, a short contact time stripper 110 (described in detail below) is located adjacent the exit barrel 4B of cyclone separator 4. This construction is such that extensions of the exit barrel walls 4B make up the walls of the stripper vessel 111. However, the various baffles and steam injection mechanisms could be located in an extension of the exit barrel itself, if so desired. Separated catalyst particles exiting the separator 4 will immediately be processed by the catalyst stripper, reducing to an absolute minimum additional contact time of hydrocarbon vapor and materials with separated catalyst particles.

Fig. 8 illustrates a short contact stripper. A conventional catalyst stripper could also be used in some circumstances in the separator exit barrel or immediately connected thereto, and a known four-stage countercurrent stripper 112 which may be used is illustrated in Fig. 5. Depending on the specifics of the stripper and the separator designs utilized, conical section 114, or some other mounting means joining the stripper to the separator exhaust, could be utilized, as illustrated in Fig. 9. Fig. 9 illustrates the combination of a conical diffuser connecting the exit barrel of cyclone separator 4 with the inlet of stripper 110.

To ensure that hydrocarbon vapors released in the stripper travel either out of the cyclone separator gas exhaust (in the case of a conventional multi-stage stripper) or through the appropriate stripper exhaust conduit (conduits 130, 132 and 134 in Figs. 3 and 4 for the short contact time stripper), it is necessary that the bottom of the strippers provide a sufficient resistance to gas flow in the downward direction. However, the lower portions cannot be completely sealed, as the catalyst particles gathering in the lower portion of the stripper must be removed for recycling and reuse in the reactor.

In the past, the extension of dipleg 22 into the catalyst bed 60 (Fig. 1) served to provide a sufficient pressure differential to force gas flow in the desired direction. However, the large volume of catalyst in the bed and the requirement that the catalyst stripper level extend to any separator dipleg (as in Fig. 1) provided additional catalyst through which injected stripping gas and separated hydrocarbons must pass, thus providing additional "residence" time and a further level of uncontrolled cracking for hydrocarbons in contact or entrained with the catalyst particles. Consequently, in another embodiment of the present invention, the lower portion of the stripper unit extends into a catalyst seal pot 140, as shown in Figs. 6 and 10. As shown in Figs. 6 and 10, catalyst level 142 (which may be above, at or below steam injection points) in the stripper is maintained, such that the gas flow resistance from the catalyst level 142 through the seal pot and to the overflowing catalyst 144, is sufficient to prevent substantial hydrocarbon-laden steam flow therethrough. However, the volume of catalyst contained in the seal pot 140 is relatively small, such that any hydrocarbon-laden steam which is entrained therein does not have the long "residence" time expected of the normal catalyst bed/dipleg seals.

Catalyst seal pot 140 has one or more drains 146 sized to permit a flow of catalyst equal to between 10 and 90% and preferably 30 to 50% of the catalyst flow rate through the catalyst seal pot. The remainder of the catalyst not flowing through drains 146 overflows the catalyst seal pot at 144, whereupon the overflowing and draining catalysts are recovered and reused. Catalyst overflowing and draining from the seal pot is contained within the bottom of the reactor and passes through a reactor exit, in much the same manner as shown in Fig. 1 with referenc to exit 44, and the catalyst is reused.

Fig. 6 illustrates a two drain seal pot, with Fig. 7 showing a single drain seal pot. In Fig. 7, the bottom of the seal pot has sloping sides 148, which serve to ensure that no catalyst remains trapped within the seal pot and that ultimately all catalyst will drain or overflow therefrom. Although the angle of the sloping sides 148 is not critical, the optimum angle would appear to be 60°.

The present invention also provides a riser deflector which assists in moving catalyst particles, along with hydrocarbon vapors, toward the exit of riser 24. In a conventional riser outlet arrangement, where the cyclone inlet is located below the top of the riser conversion zone 24, as shown in Fig. 1, catalyst particles impact against the closed top of the riser and rebound back towards the riser conversion zone. Thus, the velocity of the rebounding particles must be reduced by dynamic pressure of the rising hydrocarbon feed before again moving upwards and ultimately into the cyclone separator 4. This additional "residence" time (the time during which the catalyst is in immediate contact with hydrocarbon vapor and hydrocarbon material) causes overcracking and loss of precise control of the cracked products.

To prevent the problems caused by rebounding particles, a V-shaped or conical deflector 100 transforms the upward velocity vectors of catalyst particles contained in the hydrocarbon feed to a direction towards the inlet of cyclone separator 4. With the deflector shown in Figs. 2a and 2b, the particle trajectories are as illustrated by the dotted line arrow in Fig. 2b, which reduces "residence" time due to the rebounding of catalyst particles.

In one embodiment of the deflector, the angle $\beta$ of the deflector surface with respect to the horizontal (for a vertical riser) is between 60 and 70°, although different angles could be used depending upon the location of the cyclone separator inlet with respect to the deflector, the diameter of the riser, the distance from the riser to the separator inlet, etc. Existing risers may be converted to incorporate deflectors by the addition of baffle-type deflectors 102 and/or 104, as shown in Fig. 10. The surface of deflector 100 need not be planar and a smoothly contoured curve from the lowest point of the deflector to the upper surface of the cyclone separator inlet 4 is advantageous in redirecting catalyst travel and reducing pressure drop between the upper portion of riser 24 and cyclone separator 4. Baffle-type deflectors 102 and/or 104 may also be curved to direc the catalyst/hydrocarbon vapor flow to separator 4. While a cyclone separator has been illustrated, the deflector would be equally useful with other typef of known separators.

The present invention seeks to minimize uncontrolled cracking. To do this, a catalyst stripper is provided at the exhaust barrel of a separator. The stripper is preferably a short contact time stripper.

Fig. 3 illustrates one embodiment of a short contact time stripper 110 which is adapted to be located concentrically around riser 24. A hydrocarbon/catalyst feed ascends vertically through riser 24, passes through a separator and a catalyst stream with a minor amount of entrained cracked hydrocarbons enters the upper portion of stripper 110. Baffles 116 and 118 direct the descending catalyst towards perforated baffles 120 and 122. Steam is provided at outlets 124 and 126 and travels through only a portion of the flowing catalyst 128. The "portion" referred to is that catalyst located between the steam injection level and the intake of the inverted funnels. Since the steam does not flow through the catalyst above its associated funnel intake, it does not place the hydrocarbons entrained therewith in further contact with catalyst. Although all catalyst is contacted with steam, a given amount of steam does not contact all catalyst contained thereabove in the stripper vessel.

The hydrocarbon stripped from the catalyst by the stripping stream is prevented from further contacting catalyst by baffles 116 and 118 which serve as inverted funnels forcing the steam and entrained hydrocarbons into concentric pipes 130 and 132 for either further separation and/or stripping or fractionation (now shown). In the vertical arrangement shown in Fig. 3, the baffles 116 and 118 serve to move the catalyst in at least a partially horizontal direction, with perforated baffles 120 and 122 doing likewise. The descending catalyst particles 128 follow a circuitous route which permits a number of steam exposure locations or "stages."

Although stripper 110 in Fig. 3 is mounted concentrically around riser 24, the stripper could also be mounted apart from the riser, such as in the exhaust barrel of a separator, as shown in Fig. 10. Although two stages of steam injection are shown in Fig. 3, more or less stages could be added, depending on the amount of stripping desired and the desired level of complexity. There is no requirement that the stripped hydrocarbon vapors be carried in separate conduits 130 and 132, as shonw in Fig. 3. As shown in Fig. 4, a single conduit 134 could be used with baffles 116 and 118 and perforated baffles 120 and 122, as discussed with reference to Fig. 3. Fig. 4 illustrates stripper which includes riser 24 concentrically mounted therein, but the riser does not have to be concentrically mounted, and the Fig. 4 stripper, like that of Fig. 3, can also be mounted in the exhaust barrel of a separator. Conduits 130 and 132 in Fig. 3 and 134 in Fig. 4 conduct the stripped hydrocarbons away from further contact with catalyst to avoid increased "residence" time.

The present invention can combine stripper in the exhaust barrel of a cyclone with a short contact time stripper and/or a catalyst deflector which reduce the "residence" time during which hydrocarbons contact catalyst. In a preferred embodiment, the present inventions are all used in a single fluid catalytic cracking process or apparatus, such as shown in Fig. 10, which includes the catalyst deflectors 102 and 104, the catalyst stripper located in the barrel of cyclone separator 4, and the two-stage short contact time stripper, sealed with a low volume catalyst seal pot.

## Claims

1. A method of sealing the catalyst exit of a catalyst stripper comprising the steps of passing the stripped catalyst through a dipleg extension of the stripper and into a catalyst seal pot comprising at least one drain sized to permit between 10 and 90% of stripped catalyst to flow through the drain.

2. A method according to claim 1, wherein 30 to 50% of the catalyst flows through the drain.

3. A process according to claim 1 or 2, wherein the stripping gas is steam.

4. An apparatus as described in any of claims 1 to 3.

FIG. 1
(PRIOR ART)

FIG. 2A

FIG. 2B

FIG. 3

FIG. 4

FIG. 5

FIG. 6

FIG. 8

FIG. 7

FIG. 9

FIG. 10

HYDROCARBON CATALYST
FEED

European
Patent Office

**EUROPEAN SEARCH
REPORT**

Application Number

**EP 90 12 0675**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 219 407 (HADDAD et al.) <br> * Figures 1,2; claims; column 9, lines 9-16 * <br> — — — | 1-4 | C 10 G <br> 11/18 <br> B 01 J 8/38 |
| A | US-A-3 123 547 (PALMER et al.) <br> * Figure 2 * <br> — — — | 1-4 | |
| A | US-A-4 364 905 (FAHRIG et al.) <br> * Figures * <br> — — — | 1-4 | |
| A | US-A-4 043 899 (ANDERSON et al.) <br> * Figures 1,2 * <br> — — — — — | 1-4 | |
| | | | **TECHNICAL FIELDS SEARCHED (Int. Cl.5)** <br><br> C 10 G <br> B 01 J |

The present search report has been drawn up for all claims

| Place of search | Date of completion of search | Examiner |
|---|---|---|
| The Hague | 10 January 91 | MICHIELS P. |